# EUROPEAN PATENT SPECIFICATION

(11) **EP 3 135 926 B1**
(45) Date of publication and mention of the grant of the patent: **17.04.2019**
(21) Application number: 14890172.1
(22) Date of filing: 22.12.2014
(51) Int. Cl.: B64D 11/02, F16B 19/10, F16B 5/04, F16B 13/14

(54) **MOUNTING STRUCTURE FOR FIXTURES OF AN AIRCRAFT LAVATORY UNIT**
MONTAGESTRUKTUR FÜR BEFESTIGUNGSELEMENTE EINER FLUGZEUGTOILETTENEINHEIT
STRUCTURE DE MONTAGE POUR FIXATIONS D'UNE UNITÉ DE TOILETTES D'AÉRONEF

(30) Priority: 24.04.2014 JP 2014089780
(43) Date of publication of application: 01.03.2017
(73) Proprietor: The Yokohama Rubber Company, Limited, Tokyo 105-8685 (JP)
(72) Inventor: HIROSE, Ayano, Hiratsuka-shi Kanagawa 254-8601 (JP); KOBAYASHI, Takafumi, Hiratsuka-shi Kanagawa 254-8601 (JP); TAGUCHI, Yuji, Hiratsuka-shi Kanagawa 254-8601 (JP)
(74) Representative: Dilg, Haeusler, Schindelmann Patentanwaltsgesellschaft mbH
(86) International application number: PCT/JP2014/083850
(87) International publication number: WO 2015/162827

(56) References cited:
- WO-A1-2011/007781
- JP-A- H0 691 792
- JP-A- H03 186 606
- JP-A- H05 154 062
- JP-A- 2000 238 154
- JP-A- 2003 172 318
- JP-A- 2011 021 674
- JP-A- 2012 246 963
- JP-A- 2013 133 909
- JP-A- 2013 133 909
- JP-U- H0 548 796

## Description

### Technical Field

The present invention relates to a mounting structure for fixtures of an aircraft lavatory unit.

### Background Art

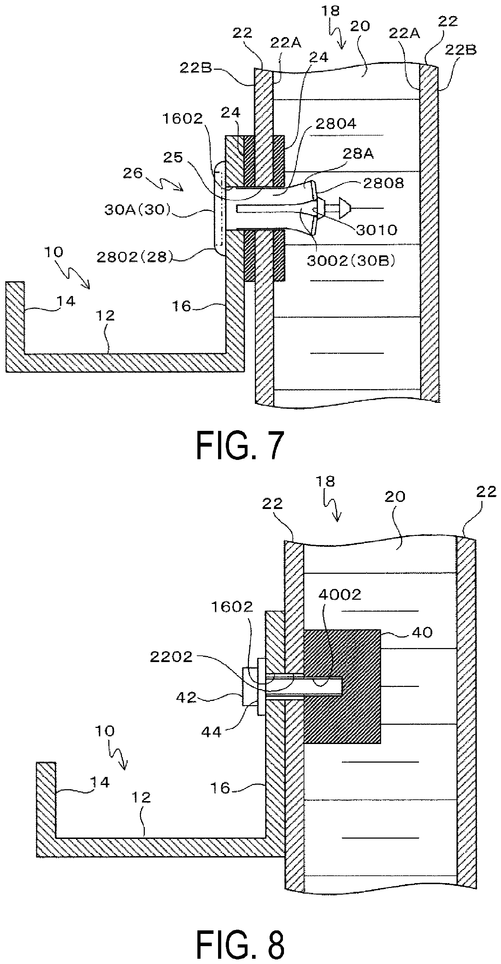

The wall panels constituting aircraft lavatory unit enclosures naturally need to be lightweight, in addition to being strong and rigid. Such wall panels (panel members) have a configuration in which a surface member is adhered to both surfaces of a core member having a honeycomb structure to satisfy strength and rigidity requirements, and also to reduce weight (see Patent Document 1).
The following are conventionally known mounting structures for mounting fixtures in aircraft lavatory units, such as storage racks and mirrors.
Namely, as illustrated in FIG. 8, a metal insert 40 with a pre-formed female screw 4002 is embedded in a wall panel 18. A metal screw 42 inserted into a fixture 10 is screwed into the female screw 4002 of the insert 40 via a metal washer 44, thereby mounting the fixture 10 to the wall panel 18.

### Citation List

### Patent Literature

Patent Document 1: Japanese Unexamined Patent Application Publication No. 2000-238154A

JP H06 91792 A describes a structure for easily mounting a seat plate on a honeycomb panel without increasing the weight.

WO 2011/007781 A1 describes a two-piece rivet.

JP 2013 133909 A describes a two-piece clip capable of reducing insertion force when a male member is inserted into a female member.

### Summary of Invention

### Technical Problem

However, in the above-described conventional configuration, the metal insert 40 with a thickness thick enough to ensure the length of the female screw, the metal screw 42 and the metal washer 44 are used. Thus, there is room to improve the weight reduction and reducing component costs.

The present invention has been devised in view of the above circumstances, and an object of the present invention is to provide a mounting structure for an aircraft lavatory unit advantageous in ensuring the mounting strength of fixtures on a wall panel while reducing weight and cost.

### Solution to Problem

In order to achieve the object described above, the present invention is a mounting structure for mounting fixtures of an aircraft lavatory unit on a wall panel. The structure comprises a wall panel including a core member having a sheet shape, and a surface member composed of fiber-reinforced composite material having a sheet shape thinner than the core member, the surface member being arranged on both surfaces of the core member, and the surface member including an inner surface mounted on the core member and a surface opposite to the inner surface. A reinforcing thin sheet is mounted on the inner surface and/or the surface of the surface member at a location at which the fixture is arranged, wherein the reinforcing thin sheet has a thickness dimension smaller than a thickness of the surface member, and a rivet insertion hole is formed penetrating the surface member and the reinforcing thin sheet. A synthetic resin rivet includes a head portion abutting a part on the fixture, the part surrounding the mounting hole for the fixture, a shaft portion projecting from the head portion and inserted into the rivet insertion hole from the mounting hole for the fixture, and an expanding portion projecting from a tip of the shaft portion on the core member side, the expanding portion expanding to a dimension larger than a diameter of the rivet insertion hole. A part of the fixture provided with the mounting hole for the fixture, the surface member, and the reinforcing thin sheet are sandwiched between the head portion of the rivet and the expanding portion, to mount the fixture to the wall panel.

### Advantageous Effect of Invention

According to the present invention, providing the reinforcing thin sheet to ensure the mounting strength of the fixture on the wall panel and using a synthetic resin rivet to mount the fixture on the wall panel makes a configuration without a metal insert and a metal screw that are large in thickness possible, thus ensuring the mounting strength for the fixture on the wall panel while reducing the weight and component cost of an aircraft lavatory unit.

### Brief Description of Drawings

FIG. 1 is a cross-sectional view of a mounting structure for fixtures of an aircraft lavatory unit according to an embodiment of the present invention and illustrates a state in which a rivet is pre-assembled.
FIG. 2 is a cross-sectional view of the mounting structure for fixtures of an aircraft lavatory unit according to the embodiment of the present invention and illustrates a state in which the pre-assembled rivet is inserted in a mounting hole.
FIG. 3 is a cross-sectional view of the mounting structure for fixtures of an aircraft lavatory unit according to the embodiment of the present invention and illustrates a state in which an expanded member of the rivet expands and the fixture is mounted on a wall panel.
FIG. 4A is a front view of the expanded member of the rivet. FIG. 4B is a view from the direction of arrow B in FIG. 4A. FIG. 4C is a cross-sectional view in the direction of line C-C in FIG. 4A. FIG. 4D is a cross-sectional view in the direction of line D-D in FIG. 4B.
FIG. 5 is a front view of an expanding member of the rivet.
FIG. 6 is a cross-sectional view of the mounting structure for fixtures of an aircraft lavatory unit and illustrates a modified example of a reinforcing thin sheet mounted on the surface of a surface member.
FIG. 7 is a cross-sectional view of a mounting structure for fixtures of an aircraft lavatory unit and illustrates a modified example of reinforcing thin sheets mounted on the surface and inner surface of a surface member.
FIG. 8 is a cross-sectional view of a mounting structure for fixtures of an aircraft lavatory unit according to a comparative example.

### Description of Embodiments

Next, a description will be given of a mounting structure for fixtures of an aircraft lavatory unit according to an embodiment of the present invention with reference to drawings.

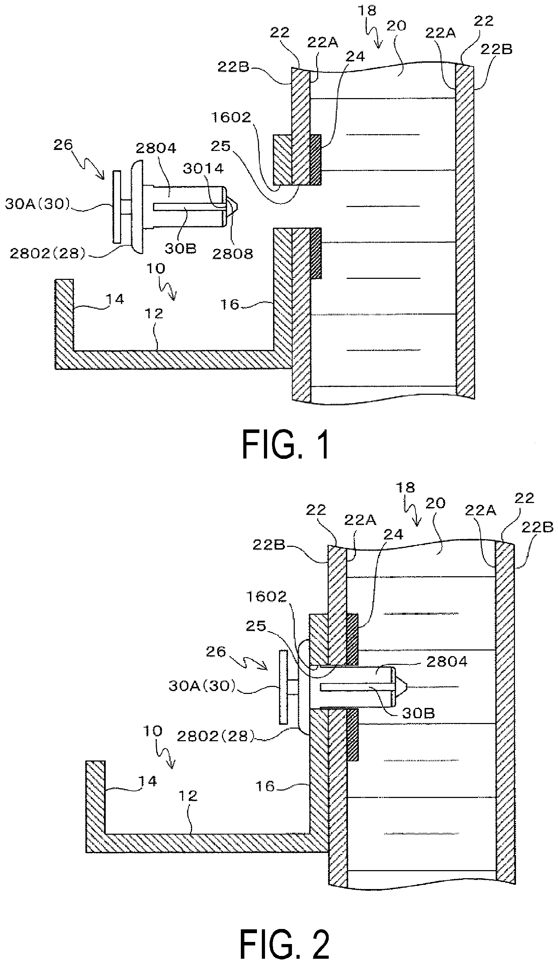

First, a description will be given of a fixture.
As illustrated in FIG. 1, a description is given of a fixture that is a synthetic resin storage rack 10 according to an embodiment of the present invention. The storage rack 10 includes a rectangularly shaped base plate 12 having a width and a length longer than the width, a first vertical plate 14 standing on one side of the base plate 12 in the width direction, and a second vertical plate 16 having a height dimension higher than that of the first vertical plate 14 and standing on the other side of the base plate 12 in the width direction. The base plate 12 is a portion where the belongings of a user of an aircraft lavatory unit are temporarily placed.
A plurality of mounting holes 1602 are formed penetrating the second vertical plate 16 at intervals in the length direction of the second vertical plate 16.

Next, a description will be given of a wall panel of an aircraft lavatory unit.
As illustrated in FIG. 1, a wall panel 18 of an aircraft lavatory unit includes a core member 20 having a sheet shape, and a surface member 22 having a sheet shape thinner than the core member 20, the surface member 22 being arranged on both surfaces of the core member 20.
A conventionally known honeycomb structure of aramid fibers, glass fibers, aluminum, or the like may be used for the core member 20.
The surface member 22 includes an inner surface 22A mounted on the core member 20, and a surface 22B opposite to the inner surface 22A, the surface 22B constituting the surface of the wall panel 18.
Fiber-reinforced composite material composed of reinforced fibers and synthetic resin may be used as the surface member 22. A fabric composed of reinforced fibers such as glass, aramid, or carbon, or a sheet-shaped prepreg material of mono filament impregnated with synthetic resin such as phenolic resin or epoxy resin, may be used as the fiber-reinforced composite material.

The inner surfaces 22A of the surface member 22 are mounted on both surfaces of the core member 20 in the thickness direction by applying pressure and heat while the inner surfaces 22A of the surface member 22 are in a state of being stacked on both surfaces of the core member 20 in the thickness direction such that the resin impregnated in the surface member 22 is thermally cured and attached to both surfaces of the core member 20 in the thickness direction.

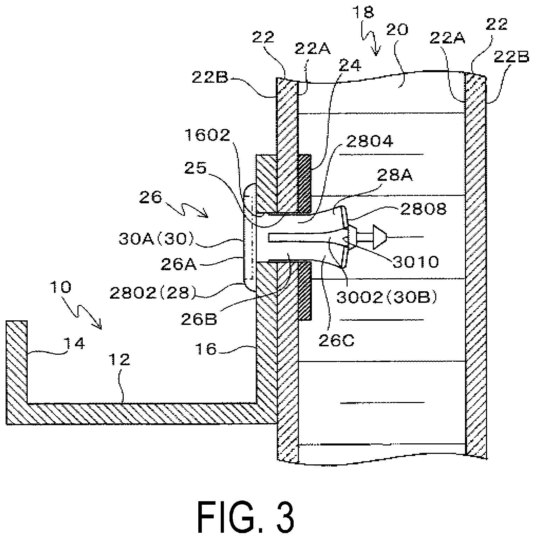

Next, a description will be given of a mounting structure for fixtures of an aircraft lavatory unit.
As illustrated in FIG. 3, the storage rack 10 is mounted on the wall panel 18 using a reinforcing thin sheet 24 and a rivet 26.
The reinforcing thin sheet 24 ensures the mounting strength of the wall panel 18 at a location at which the storage rack 10 is mounted, more specifically ensuring the mounting strength of surface member 22 at a location at which the storage rack 10 is mounted. The reinforcing thin sheet 24 has a thickness dimension smaller than the thickness of the surface member 22, which is advantageous in reducing weight and therefore preferable.
The reinforcing thin sheet 24 may be made of a metal such as an aluminum alloy or iron, the same fiber-reinforced composite material as a material used in the surface member 22, or a synthetic resin. The reinforcing thin sheet 24 made of synthetic resin is more advantageous in reducing weight. Various conventionally known synthetic resins having superior strength and rigidity may be used to form the reinforcing thin sheet 24, including ultra high molecular weight polyethylene, polypropylene, polyacetal, polyamide, polycarbonate, modified polyphenylene ether, polybutylene terephthalate, polyethersulfone, polyphenylene sulfide, polyetheretherketone, fluororesin or the like.

The reinforcing thin sheet 24 is mounted on the inner surface 22A of the surface member 22 at a location at which the storage rack 10 is arranged.
A rivet insertion hole 25 is each formed penetrating the surface member 22 and the reinforcing thin sheet 24 at a location corresponding to each of the mounting holes 1602 of the storage rack 10.
Mounting the reinforcing thin sheet 24 on the inner surface 22A of the surface member 22 is done at the same time as mounting the above-described inner surfaces 22A of the surface member 22 on both surfaces of the core member 20 in the thickness direction, for example. Namely, pressure and heat are applied while the reinforcing thin sheet 24 is in a state of being stacked between the inner surface 22A of the surface member 22 and the core member 20, and the resin impregnated in the surface member 22 is thermally cured and attached to the reinforcing thin sheet 24. Otherwise, the reinforcing thin sheet 24 is adhered to the inner surface 22A of the surface member 22 with adhesive prior to applying pressure and heat to the surface member 22 and core member 20. Namely, the reinforcing thin sheet 24 is mounted on the inner surface 22A of the surface member 22.
The rivet insertion holes 25 penetrating the surface member 22 and reinforcing thin sheet 24 are machined from the surface 22B of the surface member 22 using a machining tool such as a drill press after the surface member 22, the reinforcing thin sheet 24 and the core member 20 are attached. Otherwise, the rivet insertion holes 25 may be formed penetrating the surface member 22 and the reinforcing thin sheet 24 prior to applying pressure and heat to the surface member 22 and the core member 20 while the reinforcing thin sheet 24 is in a state of being attached to the inner surface 22A of the surface member 22 with adhesive.

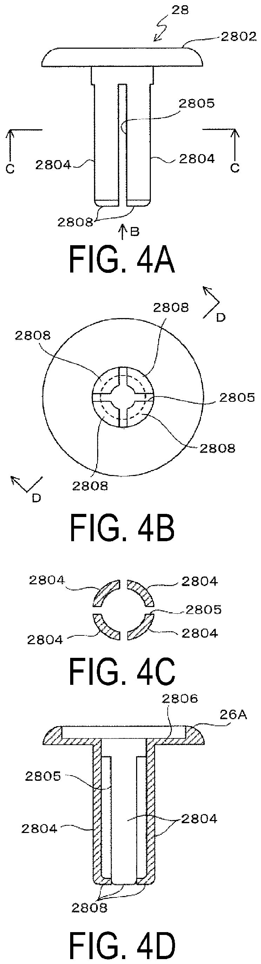

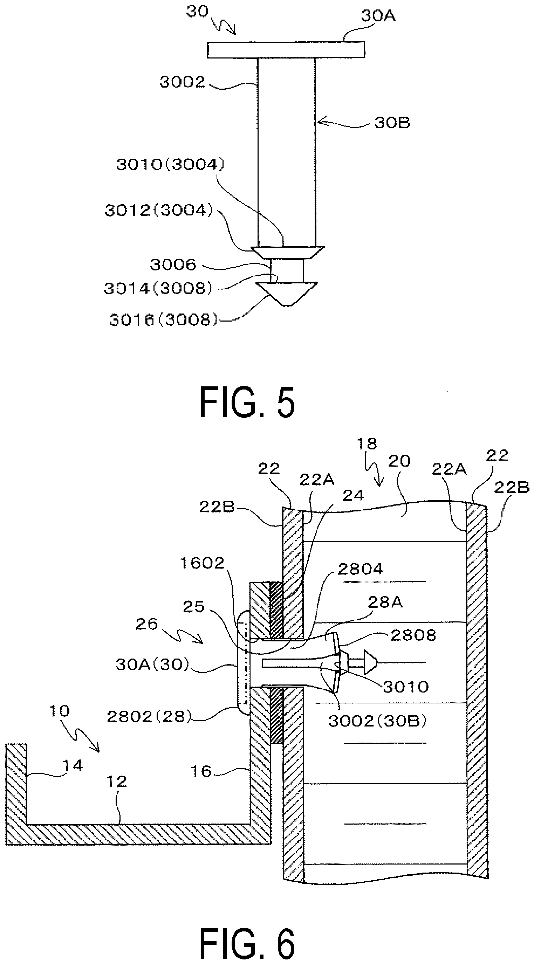

The rivet 26 is made of synthetic resin to reduce weight.
The rivet 26 comprises an expanded member 28 as illustrated in FIGS. 4A to 4D and an expanding member 30 as illustrated in FIG. 5. Both the expanded member 28 and expanding member 30 are made of synthetic resin.

As illustrated in FIGS. 4A to 4D, the expanded member 28 includes a flange portion 2802 and a plurality of leg pieces 2804.
The flange portion 2802, as illustrated in FIG. 3, has an annular shape, and is provided capable of abutting a location of the storage rack 10, the location surrounding the mounting hole 1602 (location on the second vertical plate 16).
An annular shaped housing recess portion 2806 is provided in the flange portion 2802.
The plurality of leg piece 2804 are provided projecting from the inner circumference of the flange portion 2802, and are inserted into the mounting hole 1602 and rivet insertion hole 25, and project from the reinforcing thin sheet 24 on the core member 20 side.
Four leg pieces 2804 are provided extending from the inner circumference of the flange portion 2802 in the shaft direction at equal intervals in the circumferential direction with slits 2805 formed between the adjacent leg pieces 2804.
Each of the leg pieces 2804 is capable of elastic deformation in the radial direction of the flange portion 2802, and the tip of each leg piece 2804 is a locking portion 2808 bent inward in the radial direction.

As illustrated in FIG. 5, the expanding member 30 includes an abutting portion 30A and an expanding shaft portion 30B.
The abutting portion 30A has a circular disc shape capable of abutting the bottom surface of the housing recess portion 2806 of the flange portion 2802.
The expanding shaft portion 30B projects from the bottom surface center of the abutting portion 30A and is inserted into the plurality of leg pieces 2804 from the inner circumference of the flange portion 2802. As illustrated in FIG. 3, the plurality of leg piece 2804 parts projecting from the reinforcing thin sheet 24 on the core member 20 side expand, and form leg piece parts 28A expanded to a dimension larger than the diameter of the rivet insertion hole 25.
According to the present embodiment, the expanding shaft portion 30B includes a first shaft portion 3002, a first bulging portion 3004, a second shaft portion 3006 and a second bulging portion 3008.
The first shaft portion 3002 has a circular cross section and projects from the bottom surface of the abutting portion 30A.
The first bulging portion 3004 is provided on the tip of the first shaft portion 3002.
The first bulging portion 3004 is formed by a first locking surface 3010 annularly expanding at the tip of the first shaft portion 3002, and a conical first inclined surface 3012 decreasing in diameter the further it is from the first locking surface 3010.
The second shaft portion 3006 projects from the first bulging portion 3004 concentric to the first shaft portion 3002, and is formed smaller in diameter than that of the first shaft portion 3002.
The second bulging portion 3008 is provided on the tip of the second shaft portion 3006.
The second bulging portion 3008 is formed by a second locking surface 3014 annularly expanding at the tip of the second shaft portion 3006, and a conical second inclined surface 3016 decreasing in diameter the further it is from the second locking surface 3014.

The expanded member 28 and the expanding member 30 are pre-assembled as illustrated in FIG. 1.
Namely, when the expanding shaft portion 30B of the expanding member 30 is inserted and pushed into the inner circumference of the expanded member 28, and the second inclined surface 3016 passes through the locking portion 2808 on the tip of each leg piece 2804, the locking portion 2808 of each of the leg pieces 2804 is disposed on the outer circumference of the second shaft portion 3006 and each of the leg pieces 2804 is in a closed state, and the locking portion 2808 of each of the leg pieces 2804 locks into the second locking surface 3014, resulting in a pre-assembled state without the expanding member 30 disengaging from the expanded member 28.
While in the pre-assembled state, the abutting portion 30A of the expanding member 30 and the bottom surface of the housing recess portion 2806 of the flange portion 2802 of the expanded member 28 are separated, and the abutting portion 30A projects from the flange portion 2802.
While the second vertical plate 16 of the storage rack 10 is in a state of overlapping the surface member 22 of the wall panel 18, and the mounting hole 1602 of the second vertical plate 16 is matching the rivet insertion hole 25 of the wall panel 18 and reinforcing thin sheet 24, as illustrated in FIG. 2, each of the leg pieces 2804 of the pre-assembled rivet 26 is inserted from the mounting hole 1602 of the storage rack 10 into the rivet insertion hole 25 of the wall panel 18 and reinforcing thin sheet 24, and the flange portion 2802 is brought into contact with the second vertical plate 16.
Here, as illustrated in FIG. 3, when the abutting portion 30A of the expanding member 30 is pressed until it makes contact with the bottom surface of the housing recess portion 2806 of the flange portion 2802, after the first inclined surface 3012 of the expanding shaft portion 30B of the expanding member 30 expands the locking portions 2808 of the four leg pieces 2804, the first inclined surface 3012 moves past the locking portions 2808. While in this state, each of the locking portions 2808 makes contact with the outer circumferential surface of the first shaft portion 3002.
Thus, the leg piece parts 28A are formed expanded to a dimension larger than the diameter of the rivet insertion hole 25 on the leg piece 2804 parts projecting from the reinforcing thin sheet 24.
In addition, each of the locking portions 2808 locks with the first locking surface 3010, holding the leg piece 2804 parts projecting from the reinforcing thin sheet 24 in an expanded state.

Consequently, in the present embodiment, as illustrated in FIG. 3, the head portion 26A of the rivet 26 comprises the flange portion 2802 and the abutting portion 30A.
In addition, the shaft portion 26B of the rivet 26 comprises a part closer to the flange portion 2802 of the leg piece portions 2804 and a part of the first shaft portion 3002 closer to the abutting portion 30A of the expanding shaft portion 30B.
In addition, the expanding part 26C of the rivet 26 comprises an expanded leg piece part 28A, and the tip of the first shaft portion 3002, which is distanced from the abutting portion 30A.
As a result, the part of the second vertical plate 16 provided with the mounting holes 1602, the surface member 22, and the reinforcing thin sheet 24 are sandwiched between the head portion 26A of the rivet 26 and the expanding part 26C of the rivet 26, to mount the storage rack 10 on the wall panel 18.

Furthermore, the rivet 26, for example, may provide a function making it possible to rotate the expanding member 30 inserted into the expanded member 28 in a prescribed direction so that each of the leg pieces 2804 closes to its original state, and the rivet 26 may be removed from the mounting hole 1602 and rivet insertion hole 25. The shape and structure of the synthetic resin rivet 26 is not limited to the present embodiment, and various conventionally known configurations may be used as long as the second vertical plate 16, the surface member 22, and the reinforcing thin sheet 24 are sandwiched in an overlapping state on both ends of the rivet 26 in the shaft direction.

According to the present embodiment, the mounting strength in a location on the wall panel 18 for mounting the storage rack 10 is ensured by the reinforcing thin sheet 24, and the storage rack 10 is mounted on the wall panel 18 of the aircraft lavatory unit with the synthetic resin rivets 26 while the second vertical plate 16, the surface member 22, and the reinforcing thin sheet 24 are overlapped and sandwiched between portions of the rivet 26.
Consequently, providing the reinforcing thin sheet 24 to ensure the mounting strength of a location on the wall panel 18 and using the synthetic resin rivets 26 to mount the storage rack 10 on the wall panel 18 make a configuration without metal inserts and metal screws that are large in thickness possible, which is advantageous in reducing the weight and component cost of the aircraft lavatory unit.

In addition, in the present embodiment, the expanding part 26C is formed by a very simple operation in which that the expanding member 30 of the rivet 26 is pressed into the expanded member 28, making it possible to mount the storage rack 10 on the wall panel 18, which is advantageous in simplifying mounting of the storage rack 10, and reducing the manufacturing cost of a lavatory unit.

Next, a description will be given of a modified example. Furthermore, this description shall emphasize differences from the above-described embodiment. Therefore, locations and members that are the same as in the above-described embodiment are assigned the same reference signs and their explanations shall be omitted.
In the above-described embodiment, the mounting of the reinforcing thin sheet 24 on the inner surface 22A of the surface member 22 at a location at which the storage rack 10 is arranged was described.
However, as illustrated in FIG. 6, the reinforcing thin sheet 24 may be mounted on the surface 22B of the surface member 22 with adhesive. When this is done, it is possible to mount the storage rack 10 on the wall panel 18 later.
In addition, as illustrated in FIG. 7, the reinforcing thin sheet 24 may be mounted on the inner surface 22A and the surface 22B of the surface member 22.
This is advantageous in better ensuring the mounting strength for the storage rack 10 on the wall panel 18.

A description will be given of a comparative example with reference to FIG. 8.
In the comparative example, a metal insert 40 forming a female screw 4002 is embedded in a wall panel 18. A metal screw 42 is screwed into the female screw 4002 of the metal insert 40 via a metal washer 44, thereby mounting a storage rack 10 on the wall panel 18. Furthermore, a reference sign 2202 in the drawing illustrates a mounting hole formed penetrating the surface member 22.
Consequently, in the comparative example, three metal components are used for the metal insert 40 with sufficient thickness to ensure the length of the metal screw 42, the metal washer 44, the female screw 4002 of the metal screw 42, which is disadvantageous for reducing the weight and component cost of an aircraft lavatory unit.
In contrast, in the mounting structure for fixtures of an aircraft lavatory unit according to the present invention, the reinforcing thin sheet 24 and the synthetic resin rivets 26 are used, which is advantageous in ensuring the mounting strength for the storage rack 10 on the wall panel 18, and reducing the weight and component cost of an aircraft lavatory unit.

### Reference Signs List

10 Storage rack (fixture)
1602 Mounting hole
18 Wall panel
20 Core member
22 Surface member
22A Inner surface
22B Surface
24 Reinforcing thin sheet
25 Rivet insertion hole
26 Rivet
26A Head portion
26B Shaft portion
26C Expanding part
28 Expanded member
2802 Flange portion
2804 Leg piece
28A Leg piece part
30 Expanding member
30A Abutting portion
30B Expanding shaft portion

## Claims

1. A mounting structure for mounting fixtures of an aircraft lavatory unit on a wall panel, the structure comprising:
a wall panel (18) including
a core member (20) having a sheet shape, and
a surface member (22) composed of fiber-reinforced composite material having a sheet shape thinner than the core member (20),
the surface member (22) being arranged on both surfaces of the core member (20), and
the surface member (22) including
an inner surface (22A) mounted on the core member (20), and
a surface (22B) opposite to the inner surface (22A);
a reinforcing thin sheet (24) mounted on the inner surface (22A) and/or the surface (22B) of the surface member (22) at a location at which a fixture (10) is arranged, wherein the reinforcing thin sheet (24) has a thickness dimension smaller than a thickness of the surface member (22);
a rivet insertion hole (25) formed penetrating the surface member (22) and the reinforcing thin sheet (24); and
a synthetic resin rivet (26) including
a head portion (26A) abutting a part of the fixture (10), the part surrounding a mounting hole (1602) for the fixture (10), a shaft portion (26B) projecting from the head portion (26A) and inserted into the rivet insertion hole (25) from the mounting hole (1602) for the fixture (10), and
an expanding portion (26C) projecting at a tip of the shaft portion (26B) on the core member side, the expanding portion (26C) expanding to a dimension larger than a diameter of the rivet insertion hole (25);
the part of the fixture (10) provided with the mounting hole (1602) for the fixture (10), the surface member (22), and the reinforcing thin sheet (24) being sandwiched between the head portion (26A) of the rivet (26) and the expanding portion (26C) to mount the fixture (10) to the wall panel (18).

2. The mounting structure for mounting fixtures of an aircraft lavatory unit according to claim 1, wherein:
the rivet (26) comprises
a synthetic resin expanded member (28), and
a synthetic resin expanding member (30);
the expanded member (28) includes
an annular shaped flange portion (2802) capable of abutting a part of the fixture (10), the part surrounding the mounting hole (1602), and
a plurality of leg pieces (2804) provided projecting from an inner peripheral portion of the flange portion (2802) at intervals in a circumferential direction, inserted into the mounting hole (1602) and the rivet insertion hole (25), and projecting on the core member side;
the expanding member (30) includes
an abutting portion (30A) capable of abutting the flange portion (2802), and
an expanding shaft portion (30B) projecting on the core member side from the abutting portion (30A) that expands the plurality of leg piece parts by being inserted into the plurality of leg pieces (2804);
the head portion (26A) of the rivet comprises
the flange portion (2802), and
the abutting portion (30A);
the shaft portion (26B) of the rivet (26) comprises
a part of the leg piece portion closer to the flange portion (2802), and
a part of the expanding shaft portion (30B) closer to the abutting portion (30A); and
the expanding portion (26C) of the rivet (26) comprises the expanded leg piece part, and
a tip portion of the expanding shaft portion (30B) distanced from the abutting portion (30A).

## Patentansprüche

1. Montagestruktur zum Befestigen von Befestigungselementen einer Flugzeugtoiletteneinheit an einem Wandfeld, wobei die Struktur Folgendes umfasst:
ein Wandfeld (18), beinhaltend
ein Kernelement (20), das eine Plattenform aufweist, und
ein Oberflächenelement (22), das aus faserverstärktem Verbundmaterial zusammengesetzt ist und eine Plattenform aufweist, die dünner als das Kernelement (20) ist,
wobei das Oberflächenelement (22) an beiden Oberflächen des Kernelements (20) angeordnet ist, und
das Oberflächenelement (22) Folgendes beinhaltet
eine Innenoberfläche (22A), die an dem Kernelement (20) befestigt ist, und
eine der Innenoberfläche (22A) gegenüberliegende Oberfläche (22B);
eine dünne Verstärkungsplatte (24), die auf der Innenoberfläche (22A) und/oder der Oberfläche (22B) des Oberflächenelements (22) an einer Stelle befestigt ist, an der ein Befestigungselement (10) angeordnet ist, wobei die dünne Verstärkungsplatte (24) eine Dickenabmessung aufweist, die kleiner als eine Dicke des Oberflächenelements (22) ist;
ein Nieteinsteckloch (25), das ausgebildet ist, das Oberflächenelement (22) und die dünne Verstärkungsplatte (24) zu durchdringen; und
eine Kunstharzniete (26), beinhaltend
einen Kopfabschnitt (26A), der an einem Teil des Befestigungselements (10) anliegt, wobei das Teil ein Befestigungsloch (1602) für das Befestigungselement (10) umgibt,
einen Schaftabschnitt (26B), der aus dem Kopfabschnitt (26A) vorsteht und in das Nieteinsteckloch (25) aus dem Befestigungsloch (1602) für das Befestigungselement (10) eingesteckt wird, und
einen sich spreizenden Abschnitt (26C), der an einer Spitze des Schaftabschnitts (26B) auf der Kernelementseite vorsteht, wobei sich der sich spreizende Abschnitt (26C) zu einer Abmessung spreizt, die größer als ein Durchmesser des Nieteinstecklochs (25) ist;
wobei der Teil des Befestigungselements (10), der mit dem Befestigungsloch (1602) für das Befestigungselement (10) bereitgestellt ist, das Oberflächenelement (22) und die dünne Verstärkungsplatte (24) zwischen dem Kopfabschnitt (26A) der Niete (26) und dem sich spreizenden Abschnitt (26C) eingeschlossen sind, um die Befestigungselement (10) an dem Wandfeld (18) zu befestigen.

2. Montagestruktur zum Befestigen von Befestigungselementen einer Flugzeugtoiletteneinheit nach Anspruch 1, wobei:
die Niete (26) Folgendes umfasst
ein gespreiztes Kunstharzelement (28), und
ein gespreiztes Kunstharzelement (30);
das gespreizte Kunstharzelement (28) Folgendes beinhaltet
einen ringförmig ausgebildeten Flanschabschnitt (2802), der an einem Teil des Befestigungselements (10) anliegen kann, wobei der Teil das Befestigungsloch (1602) umgibt, und
eine Vielzahl von bereitgestellten Schenkeln (2804), die von einem inneren Umfangsabschnitt des Flanschabschnitts (2802) in Intervallen in einer Umfangsrichtung vorstehen, in das Befestigungsloch (1602) und das Nieteinsteckloch (25) eingesteckt sind und auf der Kernelementseite vorstehen;
das sich spreizende Element (30) Folgendes beinhaltet
einen anliegenden Abschnitt (30A), der am Flanschabschnitt (2802) zur Anlage kommen kann, und
einen sich spreizenden Schaftabschnitt (30B), der an der Kernelementseite aus dem anliegenden Abschnitt (30A) vorsteht, der die Vielzahl der Schenkelteile spreizt, indem er in die Vielzahl von Schenkeln (2804) eingesetzt wird;
der Kopfabschnitt (26A) der Niete Folgendes umfasst
den Flanschabschnitt (2802), und
den anliegenden Abschnitt (30A);
der Schaftabschnitt (26B) der Niete (26) Folgendes umfasst
einen Teil des Schenkelabschnitts, der sich näher am Flanschabschnitt (2802) befindet, und
einen Teil des sich spreizenden Schaftabschnitts (30B), der sich näher am anliegenden Abschnitt (30A) befindet; und
der sich spreizende Abschnitt (26C) der Niete (26) den gespreizten Schenkelteil umfasst, und
einen Spitzenabschnitt des sich spreizenden Schaftabschnitts (30B), der von dem anliegenden Abschnitt (30A) entfernt ist.

## Revendications

1. Structure de montage pour le montage d'accessoires d'une unité de toilettes d'aéronef sur un panneau mural, la structure comprenant :
un panneau mural (18) incluant
un élément d'âme (20) ayant une forme de feuille, et
un élément de surface (22) composé de matériau composite renforcé par des fibres ayant une forme de feuille plus mince que l'élément d'âme (20),
l'élément de surface (22) étant agencé sur l'une et l'autre des surfaces de l'élément d'âme (20), et
l'élément de surface (22) incluant
une surface interne (22A) montée sur l'élément d'âme (20), et
une surface (22B) opposée à la surface interne (22A) ;
une feuille mince de renfort (24) montée sur la surface interne (22A) et/ou la surface (22B) de l'élément de surface (22) à un emplacement au niveau duquel un accessoire (10) est agencé, la feuille mince de renfort (24) ayant une dimension en épaisseur plus petite qu'une épaisseur de l'élément de surface (22) ;
un trou d'insertion de rivet (25) formé pénétrant dans l'élément de surface (22) et la feuille mince de renfort (24) ; et
un rivet en résine synthétique (26) incluant
une partie de tête (26A) venant en butée contre une partie de l'accessoire (10), la partie entourant un trou de montage (1602) pour l'accessoire (10),
une partie de tige (26B) faisant saillie à partir de la partie de tête (26A) et insérée dans le trou d'insertion de rivet (25) à partir du trou de montage (1602) pour l'accessoire (10), et
une partie expansible (26C) faisant saillie à un bout de la partie de tige (26B) sur le côté élément d'âme, la partie expansible (26C) s'expansant à une dimension plus grande qu'un diamètre du trou d'insertion de rivet (25) ;
la partie de l'accessoire (10) pourvue du trou de montage (1602) pour l'accessoire (10), l'élément de surface (22) et la feuille mince de renfort (24) étant intercalés entre la partie de tête (26A) du rivet (26) et la partie expansible (26C) pour monter l'accessoire (10) sur le panneau mural (18).

2. Structure de montage pour le montage d'accessoires d'une unité de toilettes d'aéronef selon la revendication 1, dans laquelle :
le rivet (26) comprend
un élément expansé en résine synthétique (28), et
un élément expansible en résine synthétique (30) ;
l'élément expansé (28) inclut
une partie de rebord de forme annulaire (2802) capable de venir en butée contre une partie de l'accessoire (10), la partie entourant le trou de montage (1602), et
une pluralité de pattes (2804) fournies faisant saillie à partir d'une partie périphérique interne de la partie de rebord (2802) à des intervalles dans une direction circonférentielle, insérées dans le trou de montage (1602) et le trou d'insertion de rivet (25), et faisant saillie sur le côté élément d'âme ;
l'élément expansible (30) inclut
une partie de butée (30A) capable de venir en butée contre la partie de rebord (2802), et
une partie de tige expansible (30B) faisant saillie sur le côté élément d'âme à partir de la partie de butée (30A) qui expanse la pluralité de parties de pattes en étant insérée dans la pluralité de pattes (2804) ;
la partie de tête (26A) du rivet comprend
la partie de rebord (2802), et
la partie de butée (30A) ;
la partie de tige (26B) du rivet (26) comprend
une partie de la partie de patte plus près de la partie de rebord (2802), et
une partie de la partie de tige expansible (30B) plus près de la partie de butée (30A) ; et
la partie expansible (26C) du rivet (26) comprend la partie de patte expansée, et
une partie de bout de la partie de tige expansible (30B) éloignée de la partie de butée (30A).
